# NOUVEAU FASCICULE DE BREVET EUROPEEN

(11) **EP 0 456 571 B2**
(45) Date de publication et mention de la décision concernant l'opposition: **26.01.2000**
(45) Mention de la délivrance du brevet: 12.07.1995
(21) Numéro de dépôt: 91401188.7
(22) Date de dépôt: 06.05.1991
(51) Int. Cl.: C08L 23/28, B60C 1/00

(54) **Composition élastomèrique à matrice halogénobutyl renforcée par une charge minérale siliceuse et son utilisation dans l'industrie pneumatique**
Silikatische Füllstoffe enthaltende Halobutylgummizusammensetzung und deren Anwendung für Reifen
Siliceous filler containing halobutyl rubber composition and its use for tires

(30) Priorité: 11.05.1990 FR 9005887
(43) Date de publication de la demande: 13.11.1991
(73) Titulaire: RHONE-POULENC CHIMIE, 92408 Courbevoie Cédex (FR)
(72) Inventeur: Machurat, Jean M., F-69250 Neuville sur Saône (FR)
(74) Mandataire: Esson, Jean-Pierre

(56) Documents cités:
- EP-A- 0 448 905
- GB-A- 2 056 460
- US-A- 4 591 617
- EUROPEAN POLYMER JOURNAL, vol. 26, no. 2, février 1990, pages 201-206, Marsh Barton, GB; D.A. BOSCOTT et al.: "Rubber-to-brass adhesion performance improved by epoxidation of the rubber"
- Kautschuk + Gummi, Kunststoffe, 41. Jahrgang, no. 12/88, pages 1248-1250
- C. Baker et al., "Epoxidierter Naturkautschuk", GAK 8/1985, pages 410, 412-415, 418-419

## Description

La présente invention concerne une composition élastomèrique à matrice halogénobutyl renforcée par une charge minérale siliceuse, présentant de hautes propriétés à la fois thermomécaniques et adhésives.

Elle concerne également l'utilisation d'une telle composition notamment dans l'industrie des pneumatiques, ainsi que certains des produits susceptibles d'être obtenus à partir de cette dernière.

On sait que les halogénobutyls sont des élastomères qui présentent la particularité intéressante d'être très imperméables à l'air et aux gaz en général.

Si les halogénobutyls partagent cette caractéristique avec quelques autres élastomères spéciaux, ils sont néanmoins les seuls à être conjointement d'un prix acceptable et compatibles avec d'autres élastomères, notamment les caoutchoucs naturels.

Par suite, les compositions élastomériques à base d'halogénobutyls ont trouvé des applications privilégiées dans l'industrie du pneumatique, soit pour la fabrication des chambres à air, soit pour la production des pneus dits sans chambre ou Tubeless. Dans ce dernier cas, les compositions d'élastomères sont utilisées sous forme de feuilles minces de revêtement (quelques dixièmes de millimètres), c'est-à-dire comme couche d'étanchéité des surfaces internes des carcasses des pneus Tubeless.

Ces compositions contiennent généralement en outre des charges de renforcement dont l'un des rôle principaux est l'amélioration des propriétés mécaniques de l'élastomère.

Il a ainsi été déjà proposé d'utiliser à titre de charge renforçante des noirs de carbone.

Toutefois, les associations halogénobutyls/noirs de carbone ne donnent pas entière satisfaction en raison du fait principalement que la résistance aux contraintes dynamiques, et notamment aux contraintes flexion-extension, de tels mélanges est insuffisante lorsqu'ils sont normalement vulcanisés. Pour pallier cet inconvénient, généralement on sous vulcanise les mélanges, mais ils souffrent alors d'une déformation rémanente importante et générent des échauffements, sous contraintes dynamiques, élevés.

C'est pourquoi l'utilisation des silices comme charge de renforcement s'est avérée être beaucoup plus prometteuse. En effet, contrairement aux noirs de carbone, les silices permettent d'obtenir à la fois une très bonne résistance aux contraintes du type flexion-extension (suivant les cas, deux à trois fois supérieures), et un échauffement plus faible, inférieur d'environ 15 à 20°C.

Néanmoins, les mélanges halogénobutyls/silices eux-mêmes ne sont pas encore complètement satisfaisants, notamment au niveau de leurs propriétés d'adhésion vis à vis de certains autres élastomères, comme par exemple les caoutchoucs naturels. En effet, pour disposer d'un pneumatique qui présente une parfaite sécurité, il faut, entre autres, que la couche d'étanchéité appliquée sur la surface interne de la carcasse pneumatique adhère parfaitement par covulcanisation à cette dernière.

Il faut en particulier que si l'on essaye de séparer les deux couches (couche d'étanchéité - carcasse pneumatique) par application d'une force mécanique perpendiculaire à leur surface de contact, on obtienne alors une rupture et non pas un décollement, c'est-à-dire, en d'autres termes, qu'il faut que les forces d'adhésion des deux couches soient supérieures aux forces de rupture de l'une des deux couches.

A ce point de vue, les compositions halogénobutyls/silices, comme d'ailleurs les compositions halogénobutyls/noirs de carbone, ne donnent pas satisfaction.

Il existe donc actuellement dans l'état de l'art un fort besoin quant à pouvoir disposer de compositions d' élastomères présentant, cumulativement, de très bonnes propriétés à la fois thermomécaniques et d'étanchéité, et aussi d'excellentes qualités adhésives vis à vis des élastomères, et notamment vis à vis des élastomères naturels utilisés dans l'industrie du pneumatique (caoutchoucs naturels).

D'un point de vue pratique, il est par ailleurs bien entendu essentiel que l'amélioration recherchée pour l'une ou l'autre de ces propriétés ne se fasse pas au détriment de l'une ou des autres propriétés.

La présente invention, dans son objet principal, vise à la satisfaction d'un tel besoin.

Plus particulièrement, la présente invention propose une composition élastomèrique à matrice halogénobutyl renforcée par une charge minérale siliceuse et qui est caractérisée par le fait qu'elle comprend en outre un caoutchouc naturel époxydé.

De façon totalement inattendue et surprenante, on a pu constater que la composition à la base de la présente invention présente des propriétés de cohésion avec les mélanges des carcasses pneumatiques, considérablement améliorées.

La cohésion à l'interface est si forte qu'il n'y a pas décollement des deux couches mais systématiquement rupture ou clivage ou déchirement de la couche d'étanchéité constituée par la composition selon l'invention. On ne constate par ailleurs aucune altération notable des excellentes propriétés thermomécaniques intrinsèques aux mélanges halogénobutyls/silices. En outre, le caoutchouc naturel époxydé ayant une imperméabilité inférieure à celle des halogénobutyls, on pouvait s'attendre à une perte d'étanchéité en remplaçant de l'halogénobutyl par du caoutchouc naturel époxydé ; en fait, il n'en est rien et le niveau d'imperméabilité est au moins conservé. Enfin, il a été constaté qu'en incorporant du caoutchouc naturel époxydé, on pouvait réduire et même supprimer la réversion des mélanges à base d'halogénobutyl.

Mais d'autres caractéristiques et avantages de l'invention seront encore mieux compris à la lecture de la description qui va suivre, et des exemples concrets, destinés à l'illustrer dans ses divers aspects.

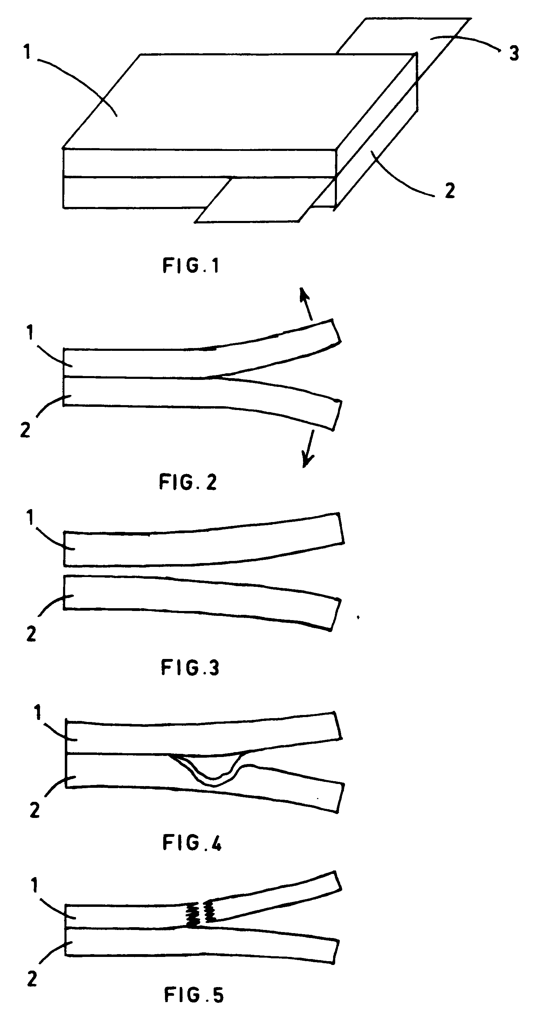

Les figures 1 à 5 jointes à la présente description illustrent le test utilisé dans les exemples pour apprécier les propriétés adhésives des compositions selon l'invention.

Les élastomères du type halogénobutyl sont des composés bien connus et extrêmement courants dans le commerce. On rappelle ici simplement qu'il s'agit de copolymères isobutène-isoprène halogénés, utilisés depuis longtemps dans l'industrie du pneumatique, principalement pour leur très faible perméabilité aux gaz. Ces produits sont des élastomères vulcanisables dont le poids moléculaire moyen en poids peut varier de 100 000 à 500 000, et dont le taux d'insaturation (introduit par le monomère isoprène) peut varier de 0,1 à 5 % en mole. (Voir à ce sujet notamment l'ouvrage de J.A. BRYDSON, "Rubbery Materials and their Compounds", aux éditions Elsevier Applied Science, New-York, 1988).

Les halogénobutyls convenant particulièrement bien pour la présente invention sont le chlorobutyl et le bromobutyl. On peut éventuellement utiliser des mélanges de ceux-ci. Selon un mode particulièrement préféré de mise en oeuvre de l'invention, on utilise le bromobutyl.

Les caoutchoucs naturels époxydés (ci-après dénommés plus simplement ENR) sont également des produits bien connus en soi, et disponibles dans le commerce. Leur taux d'époxydation peut varier dans de très larges limites, selon le degré plus ou moins poussé de la réaction d'époxydation que l'on fait subir au caoutchouc naturel (voir à ce sujet notamment l'ouvrage de J.A. BRYDSON, cité ci-dessus). Selon l'invention, des ENR présentant des taux d'époxydation compris notamment entre 25 et 75 % en mole peuvent être utilisés. Selon un mode particulièrement avantageux de réalisation de l'invention, on utilise de préférence des ENR présentant un taux d'époxydation se situant aux environs de 50 % en moles.

Selon l'invention, les proportions d'ENR dans la matrice polymérique peuvent varier dans de larges limites. Plus particulièrement, pour 100 parties en poids de polymères (halogénobutyl + ENR), on peut utiliser de 1 à 50 parties en poids d'ENR, et préférentiellement de 2 à 30 parties en poids. Des proportions trop faibles en ENR, c'est-à-dire inférieures à 1 partie en poids environ, n'apportent pas d'améliorations significatives au niveau des propriétés adhésives, et des proportions trop importantes en ENR peuvent alors diminuer ou faire perdre à la composition une partie de ses propriétés, notamment d'étanchéité aux gaz.

Selon un mode particulièrement préféré de mise en oeuvre de l'invention, on utilise un rapport optimal halogénobutyl/ENR compris entre 95/5 et 85/15, exprimé en parties en poids.

La charge minérale siliceuse utilisée dans les compositions selon l'invention peut être naturelle ou synthétique. Elle peut bien entendu être constituée de mélanges de produits silicieux naturels et/ou synthétiques. Elle se présente classiquement sous une forme pulvérulente (poudres, granulés, microperles) dont la granulométrie moyenne peut varier de quelques microns à quelques millimètres.

Il va bien entendu de soi que d'autres critères de sélection, très habituels et bien connus de l'homme de l'art dans le domaine du renforcement des élastomères par les charges siliceuses, peuvent également s'appliquer utilement dans le cadre de la présente invention. Ainsi on cherchera bien sûr à utiliser les produits qui sont plus particulièrement adaptés à l'obtention de hautes propriétés mécaniques, et ceci en fonction notamment de leur aptitude à former dans la matrice élastomèrique une dispersion stable et homogène. Ces critères reposent classiquement, et de façon non limitative, sur la surface spécifique, le volume poreux, la distribution du volume poreux, la morphologie, la prise en huile, la perte au feu, la reprise en eau, etc... des produits à utiliser. Tous ces critères, déjà bien connus en soi, n'ont pas lieu d'être développés en détails dans cet exposé.

Parmi les produits siliceux naturels, on peut citer à titre d'exemples les silices naturelles, les kaolins et les talcs.

Plus particulièrement, la présente invention s'adresse aux produits siliceux de synthèse, comme par exemples les silices de pyrogénation, les gels de silice, les silices de précipitation ou bien encore les silicates métalliques obtenus par précipitation. Tous ces produits sont disponibles sur le marché et leur production relève de procédés bien connus.

Ainsi les silicates métalliques peuvent être obtenus notamment par réaction entre un silicate alcalin, par exemple le silicate de sodium, et un sel métallique, comme par exemple le sulfate d'alumine. A titre de silicates métalliques, on peut citer plus particulièrement les silico-aluminates de sodium.

Une gamme étendue de silicates métalliques convenant particulièrement bien pour la présente invention sont commercialisés par la Société RHONE-POULENC sous les noms de marques TIXOLEX®.

Les silices de pyrogénation peuvent être obtenues par exemple par hydrolyse du tétrachlorure de silicium dans une flamme haute température (1000° C) ou bien encore selon le procédé dit à l'arc électrique. De tels produits sont commercialisés notamment par la Société DEGUSSA sous le nom de marque AEROSIL®, ou par la Société CABOT sous la marque CABOSIL®.

Les silices produites par voie humide (gels de silices, silices précipitées) sont généralement obtenues par réaction d'un silicate alcalin avec un acide tel que l'acide chlorhydrique, l'acide sulfurique ou l'acide carbonique.

La réaction peut être conduite de manière quelconque (addition d'acide sur un pied de cuve de silicate, addition simultanée totale ou partielle d'acide et de silicate sur un pied de cuve d'eau ou de solutions de silicate, etc...).

On distingue de manière classique les silices de précipitation des gels de silice selon les critères habituels et connus à savoir notamment que les silices précipitées présentent une distribution des pores très dispersée par suite d'une structure discontinue, les gels ayant au contraire une structure tridimensionnelle continue. Les silices de précipitation sont précipitées généralement à un pH voisin de 7 ou à pH basique, les gels étant eux obtenus à un pH habituellement acide ou très acide. Les silices préparées par voie humide présentent l'avantage d'être d'un coût bien moindre que les silices préparées par voie thermique.

Les silices de précipitation conviennent particulièrement bien pour la préparation des compositions selon l'invention. A titre d'exemple, on peut utiliser des silices précipitées ayant, après séchage, une surface BET selon la norme NFX 11 - 622 (3.3) généralement d'au plus 400 m²/g et de préférence comprise entre 50 et 250 m²/g. Ces silices peuvent aussi présenter des prises d'huile, selon la norme NFT 30-022 (mars 53) en mettant en oeuvre le dioctyl phtalate, pouvant varier entre 50 et 400 cm³/100 g.

Une gamme étendue de silices précipitées convenant particulièrement bien pour la présente invention sont commercialisées par la Société RHONE-POULENC sous les noms de marque ZEOSIL®.

La proportion de charge siliceuse dans la matrice élastométrique peut varier dans de larges limites. En particulier, pour 100 parties en poids de matière polymérique (halogénobutyl + ENR), on peut utiliser de 1 à 100 parties en poids de charge siliceuse. Selon un mode préféré de réalisation de la présente invention, on utilise 20 à 70 parties en poids de charge minérale pour 100 parties en poids de polymères.

Bien entendu, à côté des charges minérales siliceuses exposées ci-avant, il est également possible d'incorporer dans la matrice élastomérique, et ceci sans se départir de l'esprit de la présente invention, certaines quantités d'autres charges, telles que par exemple du noir de carbone ou de la craie, ces quantités devant néanmoins rester faibles par rapport à la proportion représentée par la charge siliceuse.

Par ailleurs les compositions selon l'invention étant plus particulièrement destinées à la préparation de couches de revêtement étanches pour pneumatiques, elles peuvent bien entendu contenir en outre divers additifs destinés à aider à leur mise en forme, notamment sous forme de feuilles minces. Ces additifs de mise en forme, tels que par exemple plastifiants, lubrifiants ou autres, sont bien connus de l'homme de l'art dans les opérations classiques de mise en forme des élastomères, et n'ont dès lors pas besoin d'être exposés plus en détails pour les besoins de l'invention.

En outre, toujours sous l'angle d'une application pour les pneumatiques (à laquelle n'est d'ailleurs pas limitée la présente invention),les compositions selon l'invention peuvent contenir divers produits aidant à la vulcanisation (vulcanisation au soufre, aux oxydes métalliques, ou au péroxyde), comme par exemple des activateurs et/ou des accélérateurs de réticulation. Il s'agit là encore de considérations tout à fait classiques et habituelles dans le cadre de la vulcanisation des élastomères.

Il est également possible d'incorporer dans les compositions selon l'invention des agents dits de couplage, dont la fonction première est d'améliorer les liaisons charges-élastomères, et ceci dans le but d'augmenter les propriétés mécaniques des vulcanisats (voir par exemple les demandes de brevets français n° 2 476 666 et 2 571 721 au nom de la Demanderesse).

Enfin, et toujours sans se départir de l'invention, les compositions peuvent en outre contenir d'autres ingrédients divers et classiques, comme par exemple des agents de protection contre le vieillissement ou bien encore des colorants organiques ou minéraux, cette liste n'étant bien sûr nullement limitative.

Les compositions selon la présente invention telles que définies ci-avant, peuvent être préparées par tout moyen connu en soi. Les éléments entrant dans la composition peuvent être amenés ensemble ou séparément. Dans ce dernier cas, il est préférable de préparer séparément un mélange halogénobutyl/charge et un mélange ENR/charge, puis de les associer ensuite dans les proportions optimales souhaitées. Il est important que l'opération de mélangeage permette d'associer intimement tous les constituants entrant dans la formulation, et ceci afin d'obtenir la composition la plus homogène possible. Cette opération peut être réalisée par exemple dans des malaxeurs industriels de types internes, ou bien encore à cylindres (dits ouverts).

Les compositions ainsi obtenues (mélanges crus) peuvent alors être préformées par découpage, calandrage, extrusion, enroulage, et..., puis être vulcanisées soit directement (bain de sel, tunnel...) ou dans des moules sous presse, jusqu'à l'obtention d'un article manufacturé présentant les propriétés mécaniques appropriées à l'application désirée.

Comme déjà indiqué ci-avant, les compositions selon l'invention trouvent une application particulièrement utile dans la fabrication de couches minces, ou feuilles, destinées à assurer un revêtement étanche et hautement résistant sur la surface externe des carcasses des pneumatiques en élastomères synthétiques ou naturels, de préférence en caoutchouc naturel. Dans ce cas, on applique les compositions selon l'invention, qui auront été préalablement mises sous la forme de feuilles minces, sur la surface externe de la carcasse du pneumatique non encore vulcanisée (par surface externe de la carcasse, c'est-à-dire la surface interne du pneumatique, on désigne bien entendu la surface qui est appelée à être en regard avec la jante de la route), puis on procède à la covulcanisation dans un moule et sous presse de l'ensemble des parties constituant le pneumatique, de manière à obtenir finalement un pneumatique vulcanisé revêtu sur sa surface interne d'une couche élastomérique à la fois parfaitement collée, parfaitement étanche, et à hautes propriétés thermomécaniques.

Des exemples illustrant l'invention vont maintenant être donnés. Dans ces exemples, le bromobutyl et le caoutchouc naturel époxydé utilisés ont été par simplicité dénommés respectivement BBR et ENR.

### EXEMPLES

### I. PREPARATION DES FORMULATIONS

Pour conduire les essais, diverses éprouvettes ont été préparées de manière à aboutir aux formulations suivantes (conformes à l'invention et comparatives) :
- des formulations du type BBR/charge(s), dont :
   . BBR/silice (F1)
   . BBR/noir de carbone (F10)
- des formulations du type BBR/ENR/charge(s), dont :
   . BBR/ENR/silice (F2, F3, F4, F8, F9)
   . BBR/ENR/silice + talc (F5)
   . BBR/ENR/silice + kaolin (F6)
   . BBR/ENR/silice + aluminosilicate de sodium (F7)
   . BBR/ENR/noir de carbone (F11).

Les formulations du type BBR/ENR/charge(s) ont été préparées selon la technique consistant à malaxer, dans des ratios déterminés, deux mélanges maîtres, c'est-à-dire un premier mélange maître BBR/charge et un deuxième mélange maître ENR/charge, dont les compositions et les modes opératoires de mise en oeuvre sont donnés ci-après. Pour préparer ces formulations, on a utilisé :
(i) un BBR à 2 % d'insaturation
(ii) un ENR époxydé à 50 % en mole (polyisoprène naturel époxydé)
(iii) une silice ZEOSIL ⁸⁵ (silice précipitée synthétique de surface spécifique BET de 80m²/g)
(iv) un noir de carbone N 762 (surface spécifique CTAB de 35 m²/g et prise d'huile DBP de 65 ml/100 g)
(vi) un talc (silicate naturel de magnésie micronisé)
(vi i) un kaolin (silicate naturel d'alumine micronisé)
(vii i) un aluminosilicate de sodium synthétique TIXOLEX 15 (surface spécifique BET de 80 m²/g).

Dans tout ce qui suit, les quantités de produits utilisées sont données en parties de poids.

### A. PREPARATION ET COMPOSITIONS DES MELANGES MAITRES BBR/CHARGE (Tableau A : mélanges maîtres A₁ et A₂)

**TABLEAU A**

| **Identification** | **A1** | **A2** |
|---|---|---|
| **BBR** | **100,0** | **100,0** |
| **Silice** | **60,0** | **-** |
| **Noir de carbone** | **-** | **60,0** |
| **Acide stéarique** | **1,0** | **1,0** |
| **Huile SUNPAR 2280** **(1)** | **15,0** | **15,0** |
| **NORSOLENE SP.80** **(2)** | **4,0** | **4,0** |
| **ZnO** | **4,5** | **4,5** |
| **Soufre** | **0,5** | **0,5** |
| **MBTS** **(3)** | **2,0** | **2,0** |
| **MgO** | **1,5** | **-** |
| **Agent de couplage** **(4)** | **3,0** | **-** |
| **Polyéthylèneglycol** | **3,5** | **-** |

| | | |
|---|---|---|
| (1) huile parafénique | | |
| (2) résine thermoplastique d'hydrocarbure à caractère aromatique et à faible insaturation oléfinique | | |
| (3) disulfure de benzothiazyl | | |
| (4) aminosilane type A 1100 | | |

Ces compositions sont préparées de la manière suivante : dans un premier temps on mal axe à 80-90° C, dans un malaxeur de type interne, tous les constituants à l'exception du soufre et du ZnO, jusqu'à l'obtention d'un mélange bien homogène, et dans un deuxième temps, on mal axe à 40° C le mélange obtenu précédemment avec le soufre et ZnO, toujours dans un malaxeur de type interne.

### B. PREPARATION ET COMPOSITIONS DES MELANGES MAITRES ENR/CHARGE (Tableau B : mélanges maîtres B1 à B5)

**TABLEAU B**

| **Identification** | **B 1** | **B2** | **B3** | **B4** | **B5** |
|---|---|---|---|---|---|
| **ENR** | **100,0** | **100,0** | **100,0** | **100,0** | **100,0** |
| **Silice** | **60,0** | **-** | **-** | **-** | **-** |
| **Noir de carbone** | **-** | **60,0** | **-** | **-** | **-** |
| **Talc** | **-** | **-** | **60,0** | **-** | **-** |
| **Kaolin** | **-** | **-** | **-** | **60,0** | **-** |
| **Aluminosilicate** | **-** | **-** | **-** | **-** | **60,0** |
| **Huile SUPAR 2280** | **10,0** | **10,0** | **10,0** | **10,0** | **10,0** |
| **ZnO** | **4,0** | **4,0** | **4,0** | **4,0** | **4,0** |
| **Acide stéarique** | **3,5** | **3,5** | **3,5** | **3,5** | **3,5** |
| **Soufre** | **1,5** | **1,5** | **1,5** | **3,5** | **3,5** |
| **Agent de couplage** | **1,8** | **-** | **0,9** | **0,9** | **0,9** |
| **Polyéthylèneglycol** | **1,8** | **-** | **0,9** | **0,9** | **0,9** |
| **Accélérateur** | **2,0** | **1,2** | **1,2** | **1,2** | **1,2** |

Ces compositions sont préparées de la manière suivante : dans un premier temps, on malaxe à 140-150° C, dans un malaxeur de type interne, tous les constituants à l'exception du soufre, de l'acccélérateur et de l'agent de couplage, jusqu'à l'obtention d'un mélange bien homogène, et dans un deuxième temps, on mal axe à environ 100° C le mélange obtenu précédemment avec le soufre, l'accélérateur et, si il y a lieu avec l'agent de couplage, toujours dans un malaxeur de type interne.

### C. PREPARATION ET COMPOSITIONS DES FORMULATIONS FINALES

Les divers mélanges maîtres BBR/Charge (A1 et A2) et ENR/Charge (B1 à B5) ont été associés par une nouvelle opération de malaxage (malaxeur type interne) et ceci selon les ratios BBR/ENR suivants : 99/1 ; 99/5 ; 90/10 ; 80/20 et 70/30.

Ces ratios sont exprimés en parties en poids pour 100 parties en poids de polymères (BBR + ENR).

Tous les autres ingrédients sont présents dans les mélanges finis au prorata de ces ratios et de leurs taux respectifs dans les mélanges maîtres de base. Toutes les formulations finales sont rassemblées dans le tableau I donné ci-après ; on a également indiqué dans ce tableau à partir de quels mélanges maîtres, ces formulations ont été obtenues.

### II RESULTATS DES ESSAIS

**A.** Le tableau I rassemble les caractéristiques rhéologiques et les propriétés mécaniques des vulcanisats.
   Les mesures rhéologiques ont été réalisées à 170° C sur un rhéomètre MONSANTO RH 100S.
   La vulcanisation a été réalisée en portant les compositions à 170° C pendant 25 minutes.
   On note que la viscosité (couple mini) des mélanges renforcés par une charge siliceuse est supérieure à celle des mélanges chargés au noir de carbone, mais que l'introduction d'ENR dans ces premiers n'entraîne pas de modification. En outre, le niveau de réticulation (delta-couple des mélanges BBR/ENR/charge siliceuse reste sensiblement constant lorsque on fait croître le taux d'ENR.
   Par contre, pour les mélanges renforcés au noir de carbone, le niveau de réticulation augmente considérablement, entraînant un accroissement très conséquent de la rigidité des vulcanisats (plus de 20 points en dureté, et plus de 100 % en module), ce qui est défavorable au niveau de la résistance à la flexion de ces vulcanisats.
   On notera également la diminution et même la suppression du phénomène de réversion des mélanges BBR/charge siliceuse lorsque le taux d'ENR augmente. Ce résultat est d'autant plus surprenant qu'un mélange ENR/silice de rapport 100/60 (en parties en poids) présente une très forte réversion égale à - 25. Par contre, le mélange BBR/noir de carbone réverse, et cette réversion s'aggrave en présence d'ENR.
   On notera enfin que les propriétés mécaniques (notamment la résistance à la rupture) des mélanges BBR/charge siliceuse sont excellentes, supérieures à celles obtenues avec le noir de carbone, et que l'introduction d'ENR dans ces premières n'entraîne pas de modifications sensibles.
**B.** Le tableau II rassemble les propriétés adhésives et de perméabilité des formulations 1 à 11.
   Pour conduire le test d'adhésion, on a procédé de la manière suivante (Fig. 1). Des feuilles calandrées (1) de 1 mm d'épaisseur réalisées à partir des formulations F1 à F11 ont été covulcanisées sous presse (25 mn à 170° C) avec des feuilles (2) de 4 mm d'épaisseur réalisées à partir de deux formulations typiques à base de caoutchouc naturel pour carcasse pneumatique : l'une est un caoutchouc naturel renforcé par du noir de carbone (C1), l'autre renforcé par de la silice (C2).
   Un intercalaire (3) est placé entre les deux feuilles pour pouvoir plus facilement ensuite procéder au test de décollement.

Dans l'ensemble covulcanisé, on a ensuite découpé des éprouvettes et déterminé le niveau d'adhésion des deux couches selon la technique consistant à appliquer une force mécanique perpendiculaire à leur surface de contact (Fig. 2).

Le niveau d'adhésion a été appréhendé de deux manières :
- qualitativement, par l'observation soit d'un décollement (Fig.3), soit d'un clivage (Fig. 4), ou bien d'une rupture (Fig. 5) des éprouvettes.
- quantitativement, par mesure de l'indice énergétique d'adhésion, exprimé en Joules/m² (déterminé à l'aide d'un dynamomètre par intégration de la courbe Force-Allongement). Plus cet indice est élevé, meilleure est l'adhésion.

Les résultats consignés dans le tableau II mettent clairement en évidence l'effet bénéfique apporté par l'introduction d'ENR dans les compositions BBR/charge siliceuse.

On pourra noter, pour la formulation F11 contenant du noir de carbone, une certaine amélioration de l'adhésion mais seulement sur la carcasse du type caoutchouc naturel renforcé silice.

Le coefficient de perméabilité, exprimé en m²/Pa.s, a été mesuré à volume constant selon la norme NF 46037. On notera que l'imperméabilité des formulations F2 à F9 est au moins conservée par rapport à la formulation F1 sans ENR.

Ceci est d'autant plus surprenant qu'un mélange type ENR/Silice de rapport 100/60 (en parties en poids) a une perméabilité élevée égale à 3,44 m²/Pa.s.

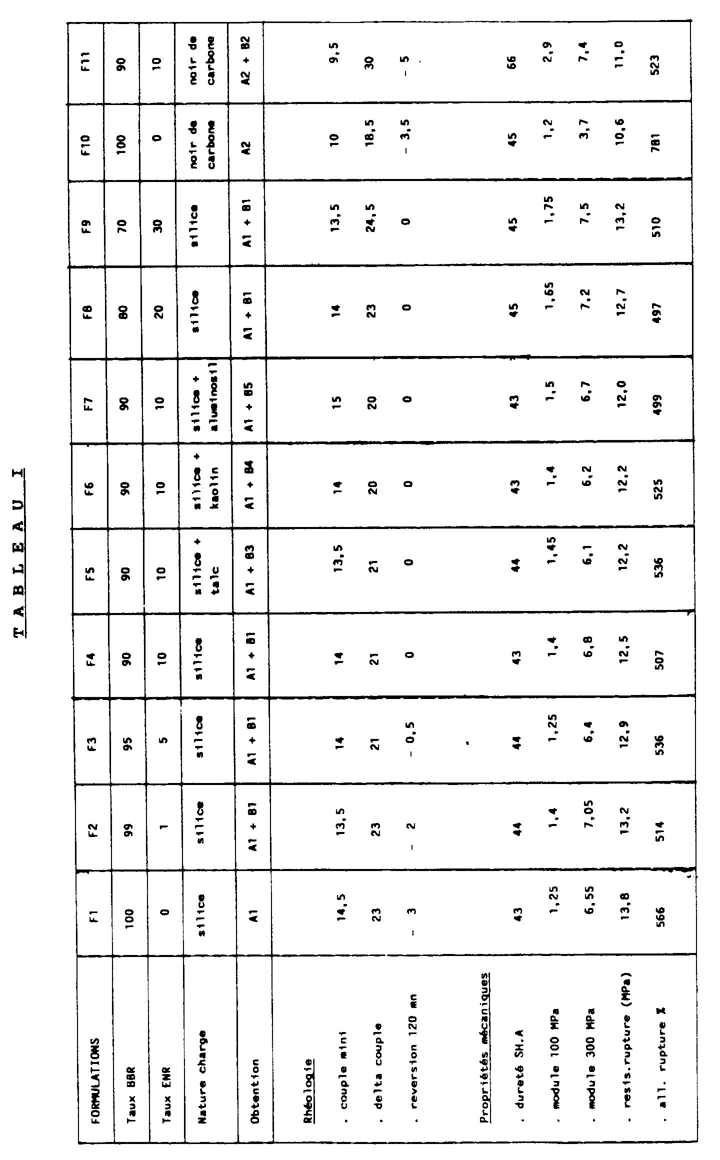

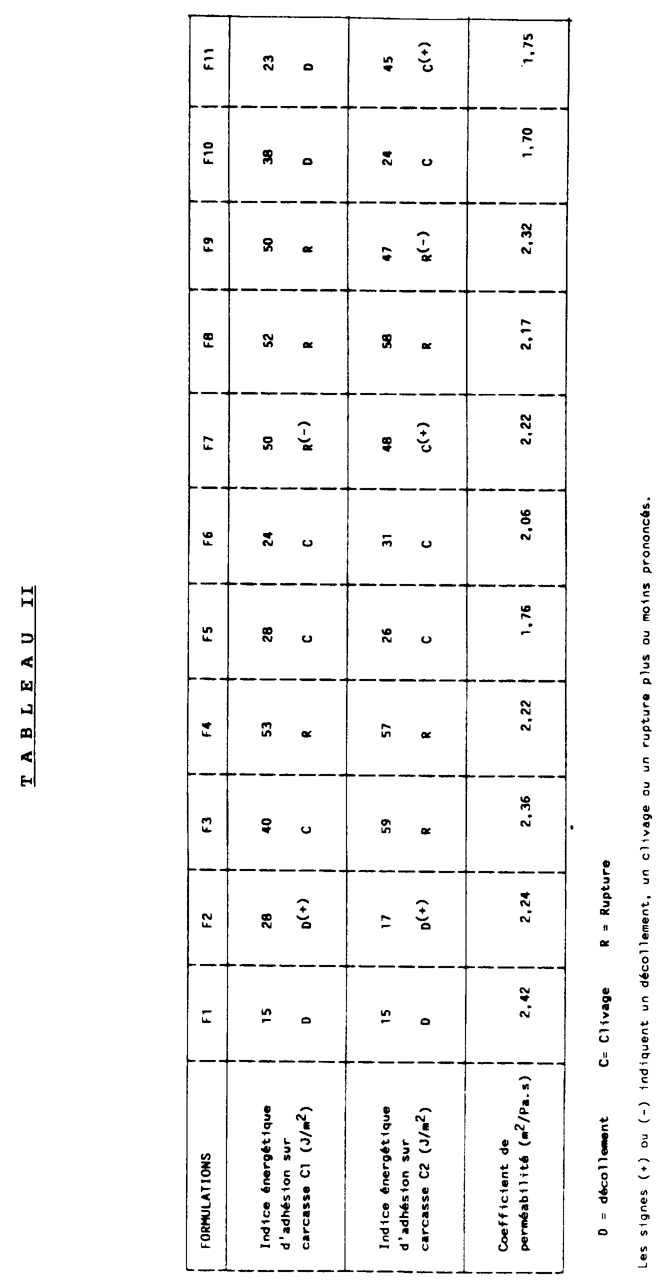

## Revendications (Revendications pour l'(les) Etat(s) contractant(s) suivant(s): AT, BE, CH, DK, ES, GR, LI, LH, NL, SE)

1. Composition élastomèrique à matrice halogénobutyl renforcée par une charge minérale siliceuse, caractérisée par le fait qu'elle comprend en outre un caoutchouc naturel époxydé (ENR).

2. Composition selon la revendication 1, caractérisée en ce qu'elle comprend de 1 à 50 parties en poids d'ENR pour 100 parties en poids de polymères.

3. Composition selon la revendication 2, caracterisée en ce qu'elle comprend de 2 à 30 parties en poids d'ENR.

4. Composition selon la revendication 3 , caractérisée en ce qu'elle comprend de 5 à 15 parties en poids d'ENR.

5. Composition selon l'une quelconque des revendications précédentes, caractérisée en ce que ledit halogénobutyl est choisi dans le groupe constitué par le chlorobutyl et le bromobutyl.

6. Composition selon la revendication 5, caractérisée en ce que ledit halogénobutyl est le bromobutyl.

7. Composition selon l'une quelconque des revendications précédentes, caractérisée en ce que ladite charge minérale siliceuse est de type naturel et/ou synthétique.

8. Composition selon la revendication 7, caractérisée en ce que ladite charge siliceuse est de type synthétique et est choisie, seule ou en mélange, dans le groupe constitué par les silices pyrogénées, les silices de précipitation, les gels de silices, et les silicates métalliques de précipitation.

9. Composition selon la revendication 8, caractérisée en ce que ladite charge siliceuse est une silice de précipitation.

10. Composition selon l'une quelconque des revendications précédentes, caractérisée en ce que qu'elle comprend de 1 à 100 parties en poids de charge siliceuse pour 100 parties en poids de polymères.

11. Composition selon la revendication 10, caractérisée en ce que qu'elle comprend de 20 à 70 parties en poids de charge siliceuse.

12. Composition selon l'une quelconque des revendications précédentes, caractérisée en ce qu'elle se présente sous la forme de feuilles minces.

13. Composition selon l'une quelconque des revendications précédentes, caractérisée en ce qu'elle est à l'état de vulcanisat.

14. Utilisation d'une composition selon l'une quelconque des revendications précédentes, pour le revêtement étanche et résistant d'élastomères naturels et/ou synthétiques, notamment du caoutchouc naturel.

15. Utilisation selon la revendication 14 destinée plus particulièrement au revêtement des surfaces internes des pneumatiques.

16. Procédé de préparation d'un pneumatique étanche aux gaz, du type consistant à revêtir la surface externe d'une carcasse pneumatique au moyen d'une couche élastomérique d'étanchéité, puis à covulcaniser l'ensemble, caractérisé en ce que l'on utilise à titre de couche élastomérique d'étanchéité, une composition selon l'une quelconque des revendications 1 à 12.

17. Pneumatique étanche aux gaz, du type comprenant une carcasse pneumatique revêtue sur sa surface externe d'une couche élastomérique d'étanchéité, caractérisé en ce que ladite couche élastomérique est à base d'une composition selon la revendication 13.

## Revendications (Revendications pour l'(les) Etat(s) contractant(s) suivant(s): DE, FR, GB, IT)

1. Composition élastomérique à matrice halogénobutyl renforcée par une charge minérale siliceuse de type synthétique, ladite charge siliceuse étant formée par au moins une silice de précipitation, caractérisée par le fait qu'elle comprend en outre un caoutchouc naturel époxydé.

2. Composition selon la revendication 1, caractérisée en ce qu'elle comprend de 1 à 50 parties en poids d'ENR pour 100 parties en poids de polymères.

3. Composition selon la revendication 2, caractérisée en ce qu'elle comprend de 2 à 30 parties en poids d'ENR.

4. Composition selon la revendication 3, caractérisée en ce qu'elle comprend de 5 à 15 parties en poids d'ENR.

5. Composition selon l'une quelconque des revendications précédentes, caractérisée en ce que ledit halogénobutyl est choisi dans le groupe constitué par le chlorobutyl et le bromobutyl.

6. Composition selon la revendication 5, caractérisée en ce que ledit halogénobutyl est le bromobutyl.

7. Composition selon l'une quelconque des revendications précédentes, caratérisée en ce qu'elle comprend de 1 à 100 parties en poids de charge siliceuse pour 100 parties en poids de polymères.

8. Composition selon la revendication 7, caractérisée en ce qu'elle comprend de 20 à 70 parties en poids de charge siliceuse.

9. Composition selon l'une quelconque des revendications précédentes, caratérisée en ce qu'elle se présente sous la forme de feuilles minces.

10. Composition selon l'une quelconque des revendications précédentes, caratérisée en ce qu'elle est à l'état de vulcanisat.

11. Utilisation d'une composition selon l'une quelconque des revendications précédentes, pour le revêtement étanche et résistant d'élastomères naturels et/ou synthétiques, notamment du caoutchouc naturel.

12. Utilisation selon la revendication 14 destinée plus particulièrement au revêtement des surfaces internes des pneumatiques.

13. Procédé de préparation d'un pneumatique étanche aux gaz, du type consistant à revêtir la surface externe d'une carcasse pneumatique au moyen d'une couche élastomérique d'étanchéité, puis à covulcaniser l'ensemble, caractérisé en ce que l'on utilise, à titre de couche élastomérique d'étanchéité, une composition selon l'une quelconque des revendications 1 à 10.

14. Pneumatique étanche aux gaz, du type comprenant une carcasse pneumatique revêtue sur sa surface externe d'une couche élastomérique d'étanchéité, caractérisé en ce que ladite couche élastomérique est à base d'une composition selon la revendication 10.

## Claims (Claims for the following Contracting State(s): AT, BE, CH, DK, ES, GR, LI, LU, NL, SE)

1. An elastomeric composition containing a halogenobutyl matrix reinforced with a siliceous mineral filler, characterised in that it also contains an epoxy natural rubber (ENR).

2. A composition according to claim 1, characterised in that it contains 1 to 50 parts by weight of ENR per 100 parts by weight of polymers.

3. A composition according to claim 2, characterised in that it contains 2 to 30 parts by weight of ENR.

4. A composition according to claim 3, characterised in that it contains 5 to 15 parts by weight of ENR.

5. A composition according to any one of the preceding claims, characterised in that said halogenobutyl is selected from the group constituted by chlorobutyl and bromobutyl.

6. A composition according to claim 5, characterised in that said halogenobutyl is bromobutyl.

7. A composition according to any one of the preceding claims, characterised in that said siliceous mineral filler is natural and/or synthetic.

8. A composition according to claim 7, characterised in that said siliceous filler is synthetic and is selected from the group constituted by pyrogenated silicas, precipitated silicas, silica gels, and precipitated metal silicates, either singly or as a mixture.

9. A composition according to claim 8, characterised in that said siliceous filler is a precipitated silica.

10. A composition according to any one of the preceding claims, characterised in that it contains 1 to 100 parts by weight of siliceous filler per 100 parts by weight of polymers.

11. A composition according to claim 10, characterised in that it contains 20 to 70 parts by weight of siliceous filler.

12. A composition according to any one of the preceding claims, characterised in that it is in the form of thin sheets.

13. A composition according to any one of the preceding claims, characterised in that it is in the form of a vulcanised rubber.

14. The use of a composition according to any one of the preceding claims, as a sealing and resistant coating for natural and/or synthetic elastomers, in particular natural rubber.

15. Use according to claim 14, in particular for coating the internal surfaces of tyres.

16. A process for the production of a gas tight tyre, in which the external surface of a tyre carcass is coated with an elastomeric sealing layer followed by covulcanisation of this assembly, characterised in that a composition according to any one of claims 1 to 12 is used as the elastomeric sealing layer.

17. A gas tight tyre comprising a tyre carcass coated on its external surface with an elastomeric sealing layer, characterised in that said elastomeric layer is based on a composition according to claim 13.

## Claims (Claims for the following Contracting State(s): DE, FR, GB, IT)

1. An elastomeric composition containing a halogenobutyl matrix reinforced with a synthetic siliceous mineral filler, said siliceous filler being formed from at least one precipitated silica, characterised in that it also contains an epoxy natural rubber (ENR).

2. A composition according to claim 1, characterised in that it contains 1 to 50 parts by weight of ENR per 100 parts by weight of polymers.

3. A composition according to claim 2, characterised in that it contains 2 to 30 parts by weight of ENR.

4. A composition according to claim 3, characterised in that it contains 5 to 15 parts by weight of ENR.

5. A composition according to any one of the preceding claims, characterised in that said halogenobutyl is selected from the group constituted by chlorobutyl and bromobutyl.

6. A composition according to claim 5, characterised in that said halogenobutyl is bromobutyl.

7. A composition according to any one of the preceding claims, characterised in that it contains 1 to 100 parts by weight of siliceous filler per 100 parts by weight of polymers.

8. A composition according to claim 7, characterised in that it contains 20 to 70 parts by weight of siliceous filler.

9. A composition according to any one of the preceding claims, characterised in that it is in the form of thin sheets.

10. A composition according to any one of the preceding claims, characterised in that it is in the form of a vulcanised rubber.

11. The use of a composition according to any one of the preceding claims, as a sealing and resistant coating for natural and/or synthetic elastomers, in particular natural rubber.

12. Use according to claim 11, in particular for coating the internal surfaces of tyres.

13. A process for the production of a gas tight tyre, in which the external surface of a tyre carcass is coated with an elastomeric sealing layer followed by covulcanisation of this assembly, characterised in that a composition according to any one of claims 1 to 10 is used as the elastomeric sealing layer.

14. A gas tight tyre comprising a tyre carcass coated on its external surface with an elastomeric sealing layer, characterised in that said elastomeric layer is based on a composition according to claim 10.

## Patentansprüche (Patentansprüche für folgende(n) Vertragsstaat(en): AT, BE, CH, DK, ES, GR, LI, LU, NL, SE)

1. Elastomer-Zusammensetzung mit Halogenbutyl-Matrix, verstärkt durch einen silikathaltigen mineralischen Füllstoff, dadurch gekennzeichnet, daß sie außerdem einen natürlichen, epoxidierten Kautschuk (ENR) umfaßt.

2. Zusammensetzung nach Anspruch 1, dadurch gekennzeichnet, daß sie 1 bis 50 Gewichtsteile ENR pro 100 Gewichtsteile Polymere umfaßt.

3. Zusammensetzung nach Anspruch 2, dadurch gekennzeichnet, daß sie 2 bis 30 Gewichtsteile ENR umfaßt.

4. Zusammensetzung nach Anspruch 3, dadurch gekennzeichnet, daß sie 5 bis 15 Gewichtsteile ENR umfaßt.

5. Zusammensetzung nach irgendeinem der vorstehenden Ansprüche, dadurch gekennzeichnet, daß das genannte Halogenbutyl aus der durch Chlorbutyl und Brombutyl gebildeten Gruppe gewählt wird.

6. Zusammensetzung nach Anspruch 5, dadurch gekennzeichnet, daß das genannte Halogenbutyl Brombutyl ist.

7. Zusammensetzung nach irgendeinem der vorstehenden Ansprüche, dadurch gekennzeichnet, daß der genannte silikathaltige mineralische Füllstoff vom natürlichen und/oder synthetischen Typ ist.

8. Zusammensetzung nach Anspruch 7, dadurch gekennzeichnet, daß der genannte silikathaltige mineralische Füllstoff vom synthetischen Typ ist und allein oder in Mischung aus der Gruppe gewählt wird, die durch die Kieselerden aus der Verbrennung, die Kieselerden aus der Fällung, die Kieselgele und die Metall-Silikate aus der Fällung gebildet wird.

9. Zusammensetzung nach Anspruch 8, dadurch gekennzeichnet, daß der genannte silikathaltige Füllstoff eine Kieselerde aus der Fällung ist.

10. Zusammensetzung nach irgendeinem der vorstehenden Ansprüche, dadurch gekennzeichnet, daß sie 1 bis 100 Gewichtsteile silikathaltigen Füllstoff pro 100 Gewichtsteile Polymere umfaßt.

11. Zusammensetzung nach Anspruch 10, dadurch gekennzeichnet, daß sie 20 bis 70 Gewichtsteile silikathaltigen Füllstoff umfaßt.

12. Zusammensetzung nach irgendeinem der vorstehenden Ansprüche, dadurch gekennzeichnet, daß sie in Form von dünnen Folien vorliegt.

13. Zusammensetzung nach irgendeinem der vorstehenden Ansprüche, dadurch gekennzeichnet, daß sie im Zustand von Vulkanisat vorliegt.

14. Verwendung einer Zusammensetzung nach irgendeinem der vorstehenden Ansprüche für den dichten und widerstandsfähigen Überzug von natürlichen und/oder synthetischen Elastomeren, insbesondere von natürlichem Kautschuk.

15. Verwendung nach Anspruch 14, insbesondere vorgesehen für den Überzug der inneren Flächen von Gummireifen.

16. Verfahren zur Herstellung eines gasdichten Gummireifens, das darin besteht, die äußere Oberfläche einer Reifenkarkasse mit Hilfe einer dichten Elastomerschicht zu überziehen und das Ganze anschließend zu covulkanisieren, dadurch gekennzeichnet, daß man als dichte Elastomerschicht eine Zusammensetzung nach irgendeinem der Ansprüche 1 bis 12 verwendet.

17. Gasdichter Gummireifen von dem Typ, der eine Reifenkarkasse umfaßt, die auf ihrer äußeren Oberfläche mit einer dichten Elastomerschicht überzogen ist, dadurch gekennzeichnet, daß die genannte Elastomerschicht auf einer Zusammensetzung nach Anspruch 13 basiert.

## Patentansprüche (Patentansprüche für folgende(n) Vertragsstaat(en): DE, FR, GB, IT)

1. Elastomer-Zusammensetzung mit Halogenbutyl-Matrix, verstärkt durch einen silikathaltigen mineralischen Füllstoff vom synthetischen Typ, wobei der genannte silikathaltige Füllstoff durch mindestens eine Kieselerde aus der Fällung gebildet wird, dadurch gekennzeichnet, daß sie außerdem einen natürlichen, epoxidierten Kautschuk (ENR) umfaßt.

2. Zusammensetzung nach Anspruch 1, dadurch gekennzeichnet, daß sie 1 bis 50 Gewichtsteile ENR pro 100 Gewichtsteile Polymere umfaßt.

3. Zusammensetzung nach Anspruch 2, dadurch gekennzeichnet, daß sie 2 bis 30 Gewichtsteile ENR umfaßt.

4. Zusammensetzung nach Anspruch 3, dadurch gekennzeichnet, daß sie 5 bis 15 Gewichtsteile ENR umfaßt.

5. Zusammensetzung nach irgendeinem der vorstehenden Ansprüche, dadurch gekennzeichnet, daß das genannte Halogenbutyl aus der durch Chlorbutyl und Brombutyl gebildeten Gruppe gewählt wird.

6. Zusammensetzung nach Anspruch 5, dadurch gekennzeichnet, daß das genannte Halogenbutyl Brombutyl ist.

7. Zusammensetzung nach irgendeinem der vorstehenden Ansprüche, dadurch gekennzeichnet, daß sie 1 bis 100 Gewichtsteile silikathaltigen Füllstoff pro 100 Gewichtsteile Polymere umfaßt.

8. Zusammensetzung nach Anspruch 7, dadurch gekennzeichnet, daß sie 20 bis 70 Gewichtsteile silikathaltigen Füllstoff umfaßt.

9. Zusammensetzung nach irgendeinem der vorstehenden Ansprüche, dadurch gekennzeichnet, daß sie in Form von dünnen Folien vorliegt.

10. Zusammensetzung nach irgendeinem der vorstehenden Ansprüche, dadurch gekennzeichnet, daß sie im Zustand von Vulkanisat vorliegt.

11. Verwendung einer Zusammensetzung nach irgendeinem der vorstehenden Ansprüche für den dichten und widerstandsfähigen Überzug von natürlichen und/oder synthetischen Elastomeren, insbesondere von natürlichem Kautschuk.

12. Verwendung nach Anspruch 11, insbesondere vorgesehen für den Überzug der inneren Flächen von Gummireifen.

13. Verfahren zur Herstellung eines gasdichten Gummireifens, das darin besteht, die äußere Oberfläche einer Reifenkarkasse mit Hilfe einer dichten Elastomerschicht zu überziehen und das Ganze anschließend zu covulkanisieren, dadurch gekennzeichnet, daß man als dichte Elastomerschicht eine Zusammensetzung nach irgendeinem der Ansprüche 1 bis 10 verwendet.

14. Gasdichter Gummireifen von dem Typ, der eine Reifenkarkasse umfaßt, die auf ihrer äußeren Oberfläche mit einer dichten Elastomerschicht überzogen ist, dadurch gekennzeichnet, daß die genannte Elastomerschicht auf einer Zusammensetzung nach Anspruch 10 basiert.
